# EUROPEAN PATENT SPECIFICATION

(11) **EP 2 723 192 B1**
(45) Date of publication and mention of the grant of the patent: **28.01.2015**
(21) Application number: 12725434.0
(22) Date of filing: 04.06.2012
(51) Int. Cl.: A23L 1/212, A23L 1/224, A23B 7/022

(54) **METHOD OF PREPARING DEHYDRATED SAUTEED VEGETABLE PIECES**
VERFAHREN ZUR HERSTELLUNG ENTWÄSSERTER SAUTIERTER GEMÜSESTÜCKE
PROCÉDÉ DE PRÉPARATION DE MORCEAUX DE LÉGUMES SAUTÉS DÉSHYDRATÉS

(30) Priority: 22.06.2011 EP 11170886
(43) Date of publication of application: 30.04.2014
(73) Proprietor: Unilever N.V., 3013 AL Rotterdam (NL); Unilever PLC, London, Greater London EC4Y 0DY (GB)
(72) Inventor: JESSBERGER, Sonja, Erika, 74074 Heilbronn (DE); MÖNNINGHOFF, Julia, 74074 Heilbronn (DE); SCHMID, Hermann, 74074 Heilbronn (DE); SPRAUL, Martin, Helmut, 74074 Heilbronn (DE)
(74) Representative: Tjon, Hon Kong Guno
(86) International application number: PCT/EP2012/060491
(87) International publication number: WO 2012/175318

(56) References cited:
- EP-A1- 2 092 836
- US-B2- 6 730 345
- DATABASE WPI Week 200752 Thomson Scientific, London, GB; AN 2007-530521 XP002664033, & JP 2007 167045 A (ARAKI KK) 5 July 2007 (2007-07-05)
- DATABASE WPI Week 200420 Thomson Scientific, London, GB; AN 2004-211485 XP002664034, & KR 2003 0087364 A (CO 72 KIM SEONG HO) 14 November 2003 (2003-11-14)

## Description

### Technical field of the invention

The present invention relates to a process for preparing dehydrated sautéed vegetables, said method comprising:
- providing pieces of fresh vegetable belonging to the genus *Allium*;
- combining the vegetable pieces with an oil component;
- heating the combination of vegetable pieces and oil component; and
- dehydrating the heated vegetable pieces. Examples of vegetables that belong to the genus *Allium* include onion, garlic, shallots, leeks, scallions and chives.

### Background of the invention

Dried pieces of vegetables that belong to the genus *Allium* are used as ingredients in numerous foodstuffs (e.g. soups and sauces, complete dishes, stews). For several applications, e.g. dry and instant applications, it is desirable that these dried vegetable pieces, following rehydration, have a flavour that closely resembles the flavour of freshly prepared sautéed vegetables.

Sautéing is a method of cooking food that uses a small amount of fat in a shallow pan over moderate heat. Ingredients are usually cut into pieces or thinly sliced to facilitate fast cooking. The surface of food that is sautéed undergoes browning while texture, moisture and flavour are preserved.

Industrial methods for the preparation of dried pieces of vegetables of the genus *Allium* that have undergone heat treatment in the presence of oil are known in the art.

US 2,236,641 describes a method of treating onions comprising subdividing the onions, processing the onions with heat in the presence of fat until the onions turn brown; and then removing the moisture from the product. The US patent does not provide any details about the heating and drying conditions that are to be employed in this method.

JP 60070031 describes a process for the preparation of a dried vegetable preparation, said method comprising: cutting or grinding the vegetable into small pieces; adding the pieces to a vegetable edible oil in an amount 5-50 wt.% based on the oil; heating to 110-170 °C for not more than 60 minutes; separating the vegetable pieces from the oil; and drying the vegetable pieces to a moisture content of less than 30 wt.%.

US 6,730,345 describes a method for sautéing onions, comprising:
- cutting at least one cleaned, whole onion to produce onion parts;
- coating said onion parts with a sautéing agent;
- sautéing said onion parts by contacting with an amount of heated air at a temperature of 121-204 °C for 6-60 minutes to produce sautéed onion parts; and,
- treating said sautéed onions, wherein said treatment is selected from the group consisting of freezing, drying, freeze drying, treating with preservatives, and combinations thereof.

GB-B 932 847 describes a process for the preparation of crisp fried onions, wherein the water content of the onions is adjusted to 30-40 wt.%, where after they are cooked in oil or fat at or near, but not over the boiling point of water and then heated at a temperature of 150-160 °C.

The aforementioned methods suffer from a number of drawbacks. A drawback that all of these methods share is that they yield dehydrated vegetable pieces that have a flavour that is quite different from that of freshly prepared sautéed vegetables. Furthermore, some of these methods produce dehydrated vegetable pieces that have an undesired colour. More particularly, these methods produce vegetable pieces that have a pronounced brown colour, whereas for sautéed vegetables such as onions a rather pale white-yellowish-golden colour is preferred.

### Summary of the invention

The present inventors have developed a method for the preparation of dehydrated sautéed vegetable pieces of the genus *Allium* that does not suffer from the aforementioned drawbacks. More particularly, the invention provides a method of preparing dehydrated sautéed vegetable pieces, said method comprising:
- providing pieces of fresh vegetable belonging to the genus *Allium,* at least 50 wt.% of said vegetable pieces having a weight of 0.05-5 g;
- combining said vegetable pieces with an oil component in a weight ratio 1:25 to 20:1 to produce a vegetable-oil combination;
- heating the vegetable-oil combination to a temperature of 80-100°C for 3-80 minutes whilst ensuring that the water content of the vegetable pieces is reduced by not more than 20%;
- removing a part of the oil contained in the heated vegetable-oil combination and recovering the heated vegetable pieces; and
- dehydrating the heated vegetable pieces at a temperature of less than 98°C for at least 1 hour to produce dehydrated sautéed vegetable pieces having a water activity of less than 0.5 and an oil content of less than 45 wt.%.

The dehydrated sautéed vegetables obtained by this method have excellent shelf life stability. In addition, these dehydrated vegetables can be rehydrated to produce vegetable pieces that are almost indistinguishable from freshly prepared sautéed vegetable pieces in terms of taste, texture and appearance.

Although the inventors do not wish to be bound by theory, it is believed that the advantageous properties of the dehydrated sautéed vegetable pieces are largely attributable to the fact that the preparation method employs mild heating conditions during which loss of moisture is minimized, followed by dehydration under equally mild conditions. Thus, excessive browning and formation of undesirable flavour notes are avoided whilst at the same time loss of desirable (volatile) flavour notes is minimized.

The present invention also provided dehydrated sautéed vegetable pieces obtained by the method described herein.

### Detailed description of the invention

Accordingly, one aspect of the invention relates to a method of preparing dehydrated sautéed vegetable pieces, said method comprising:
- providing pieces of fresh vegetable belonging to the genus *Allium,* at least 50 wt.% of said vegetable pieces having a weight of 0.05-5 g;
- combining said vegetable pieces with an oil component in a weight ratio 1:25 to 20:1 to produce a vegetable-oil combination;
- heating the vegetable-oil combination to a temperature of 80-100°C for 3-80 minutes whilst ensuring that the water content of the vegetable pieces is reduced by not more than 20%;
- removing a part of the oil contained in the heated vegetable-oil combination and recovering the heated vegetable pieces; and
- dehydrating the heated vegetable pieces at a temperature of less than 98°C for at least 1 hour to produce dehydrated sautéed vegetable pieces having a water activity of less than 0.5 and an oil content of less than 45 wt.%.

The term "fresh vegetable" as used herein refers to a vegetable that after harvesting has not been preserved by drying, irradiation, canning, pickling, salting, sugar crystallisation, food irradiation, preserving in syrup, and/or addition of preservatives. The term "fresh vegetable" does encompass a fresh vegetable that has been frozen in order to preserve its fresh state.

The pieces of fresh vegetable employed in the present method are suitably obtained by cutting fresh vegetables. The term "cutting" as used herein refers to the subdividing of vegetables into smaller pieces. Such subdividing may be achieved by techniques well known in the art, e.g. by slicing the vegetables with knives, cutting threads etc.

The term "oil component" as used herein refers to a material that contains at least 40 wt.% of oil. Throughout this application, unless indicated otherwise, the terms oil and fat are synonyms and used interchangeably.

The term "oil" as used herein refers to a lipid selected from the group consisting of triglycerides, diglycerides, monoglycerides, phospholipids and combinations thereof. Whenever reference is made herein to dehydration of heated vegetable pieces at a certain temperature, unless indicated otherwise, what is meant is that during said dehydration the temperature of the heated vegetable pieces is maintained at that particular temperature.

The requirement that the water content of the vegetable pieces is reduced by not more than 20% during the heating step means that of the total amount of water contained in the vegetable pieces at the beginning of the heating step at least 80% is still retained in said vegetable pieces after the heating.

Examples of vegetables belonging to the genus *Allium* that can advantageously be processed in accordance with the present method include onion, garlic, shallots, leeks, scallions, chives and combinations thereof. Preferably, the vegetable is selected from onion, shallots, garlic and combinations thereof. Even more preferably, the vegetable is selected from onion, shallots and combinations thereof. Most preferably, the vegetable is onion.

The pieces of fresh vegetable that are employed in the present method can be cut in different shapes, e.g. dices, cubes, slices, ring segments, julienne, florets, etc. Preferably, at least 80 wt.% of the vegetable pieces have a weight of 0.05-5 g, more preferably of 0.1-3 g.

The combining of the vegetable pieces with the oil component may occur prior to or during the heat treatment. During the combining the size and shape of the vegetable pieces remains virtually unaltered. Thus, the term "combining" does not encompass the grinding or homogenisation of the combination of vegetable pieces and oil component to produce a fine paste.

The vegetable pieces are preferably combined with the oil component in a weight ratio 1:15 to 15:1 to produce the vegetable-oil combination. Most preferably the latter weight ratio lies within the range of 1:10 to 10:1.

The vegetable-oil combination that is obtained by the combining of the vegetable pieces with the oil component may suitably contain pieces of other vegetables besides the pieces of the fresh vegetables belonging to the genus *Allium.* Examples of vegetables that may also be incorporated in the vegetable-oil combination include carrot, celery, aubergine, bell pepper, pastinake and combinations thereof. According to a preferred embodiment, the vegetable-oil combination contains at least 5 wt.%, preferably at least 7 wt.% and most preferably at least 8 wt.% of the pieces of the fresh vegetables belonging to the genus *Allium.*

Typically, the oil component represents at least 15 wt.%, more preferably at least 25 wt.% and most preferably at least 50 wt.% of the vegetable-oil combination.

Advantageously, at least 30 wt.%, more preferably at least 40 wt.% and most preferably at least 50 wt.% of the vegetable pieces contained in the vegetable-oil combination are pieces of the vegetables belonging to the genus *Allium.*

Together, the vegetable pieces and the oil component preferably represent at least 80 wt.%, more preferably at least 90 wt.% and most preferably at least 95 wt.% of the vegetable-oil combination that is heated in the present method.

The inventors have found that the present method produces particularly good results if the vegetable-oil combination is heated to a temperature that does not exceed 98 °C. It is further preferred that the vegetable-oil combination is heated to a temperature that exceeds 83 °C, more preferably exceeds 85 °C and most preferably exceeds 87 °C.

According to a particularly preferred embodiment of the present process, the vegetable pieces are not exposed to temperatures in excess of 100 °C during heating or dehydration. According to a particularly preferred embodiment, the vegetable pieces are not exposed to temperature in excess 98 °C.

The vegetable-oil combination is preferably heated to the indicated temperature for at least 4 minutes, more preferably for at least 5 minutes. Advantageously, said heating period does not exceed 60 minutes. Most preferably, the heating period does not exceed 40 minutes.

It is strongly preferred to carry out the heat treatment of the vegetable-oil combination under such conditions that the water content of the vegetable pieces is not substantially reduced. Advantageously, the water content of the vegetable pieces is reduced by not more than 18% during the heat treatment. Even more preferably, the water content is reduced by not more than 16% and most preferably by not more than 15% during the heat treatment.

According to a preferred embodiment, the vegetable-oil combination is heated at a pressure of at least 800 bar. Even more preferably, the mixture is heated under atmospheric pressure using the heating conditions specified herein before. Advantageously, the heating is carried out whilst the vegetable-oil combination is in direct contact with air.

The oil component that is employed in the present method advantageously contains 50-100 wt.% of a fat phase and 0-50 wt.% of an aqueous phase. Taken together, oil and water typically constitute at least 80 wt.% of the oil component. Even more preferably, the combination of oil and water represents at least 90 wt.% of the oil component. Examples of oil components that may suitably be employed in the present method include butter, butter oil, olive oil, palm oil, sunflower oil and soybean oil. Preferably, the oil component is selected from butter, butter oil, olive oil, palm oil and combinations thereof.

The removal of part of the oil contained in the heated vegetable-oil combination may be achieved, for instance, by passing the heated vegetable-oil combination over a screen with a mesh size that is sufficiently small to retain the bulk of the heated vegetable pieces. Typically, at least 10% of the oil contained in the heated vegetable-oil composition is removed before the dehydration. Even more preferably at least 40% of the oil is removed and most preferably at least 70% of the oil is removed.

According to a particularly preferred embodiment, the present method comprises the removal of oil that is clinging to the surface of heated vegetable pieces before the dehydration. This removal is advantageously achieved by, for instance, centrifuging or shaking the vegetable pieces. Alternatively, oil may be removed by blowing a gas stream across the heated vegetable pieces or by contacting the vegetable pieces with an oil absorbing medium.

Preferably, at the beginning of the dehydration step, the heated vegetable pieces contain less than 15 wt.%, more preferably les than 8 wt.% and most preferably less than 2 wt.% of free oil. Here "free oil" refers to the oil that is removed from the heated vegetable pieces by centrifuging said vegetable pieces at 1230 G for 30 seconds.

In the present method a significant amount of the oil contained in the oil component is transferred to the heated vegetable pieces during the heating step. Even though it is advantageous to remove free oil that clings to the heated vegetable pieces, at the beginning of dehydration the heated vegetable pieces typically contain at least 3%, more preferably at least 5% and most preferably at least 7% of oil by weight of dry matter. The amount of oil contained in the heated vegetable pieces, preferably does not exceed 45% by weight of dry matter. Even more preferably the latter oil content does not exceed 36%, most preferably it does not exceed 32% by weight of dry matter.

The heated vegetable pieces are preferably dehydrated under mild conditions in order to preserve desirable properties of the vegetable pieces. Typically, the heated vegetable pieces are dehydrated at a temperature of less than 90°C, more preferably less than 85°C, even more preferably of less than 80°C.

The dehydration of the heated vegetable pieces preferably comprises air drying, vacuum drying and/or freeze drying. Both air drying and vacuum drying are preferably performed at a temperature of 15-75°C. According to a particularly preferred embodiment the dehydration step comprises at least 3 hours, even more preferably at least 5 hours of air drying and/or vacuum drying at a temperature of 35-75°C, especially of 40-70°C.

Dehydration by air drying preferably comprises exposing the heated vegetable pieces to a flow of air having a flow rate in the range of 0.01-1.0 m³/s per kg of heated vegetable pieces, preferably of 0.04-0.5 m³/s per kg of heated vegetable pieces. Here the kilogram in "per kg of heated vegetable pieces" refers to the non-dehydrated heated vegetable pieces at the beginning of the dehydration process.

Vacuum drying is advantageously carried out under a reduced pressure of less than 100 mbar, more preferably of less than 50 mbar.

The dehydration step in the present method is typically completed within 30 hours, most preferably within 24 hours.

The water activity of the dehydrated sautéed vegetable pieces obtained by the present method typically is less than 0.45, most preferably less than 0.4.

The dehydrated sautéed vegetable pieces obtained by the present method preferably have an oil content of 10-40 wt.%, more preferably of 12-35 wt.% and most preferably of 14-30 wt.%.

The present process is preferably carried out under such conditions that essentially no puffing of the vegetable pieces occurs. Typically, the volume of the vegetable pieces does not increase in the present process.

The present method offers the advantage it enables the preparation of dehydrated sautéed vegetable pieces that have excellent shelf-stability even if the oil component comprises substantial levels of unsaturated fatty acids which are easily oxidized. Thus, unlike methods described in the art, the present method does not require the use of hydrogenated fats. Accordingly, in a preferred embodiment, the oil component does not contain hydrogenated oil. Typically, at least 15 wt.%, more preferably at least 20 wt.% of the fatty acids residues contained in the oil component are unsaturated fatty acid residues.

The vegetable-oil combination that is heated in accordance with the present method may suitably contain other components besides the vegetable pieces and the oil component. Typically, these other components constitute less than 40 wt.%, more preferably less than 20 wt.% and most preferably less than 10 wt.% of the vegetable-oil combination. According to another preferred embodiment, the oil-vegetable combination that is heated in the present method does not contain an added starch-containing granular component.

Another aspect of the present invention relates to dehydrated sautéed vegetable pieces that are obtained by the method described herein.

The dehydrated sautéed pieces produced in the present method preferably have not undergone substantial browning. Instead, the dehydrated pieces preferably have a yellowish/golden colour. Thus, in accordance with a particularly preferred embodiment the dehydrated sautéed pieces are characterized by a Hunter Lab L*-value of at least 50.0, even more preferably of at least 55.0, most preferably of at least 60.0. Typically, said L*-value does not exceed 80.0, more preferably it does not exceed 75.0. The Hunter Lab a*-value of the dehydrated sautéed pieces typically does not exceed 12.0. More preferably, the a*-value lies within the range of -2.0-10.0.

The invention is further illustrated by means of the following non-limiting examples.

### EXAMPLES

### Example 1

Raw onions were peeled and subsequently cut into cubes (4.8x4.8 mm). About 10 minutes after the cutting, the onion cubes were combined with butter in a weight ratio of 1:10 and heated to 90°C for 10 minutes in a pot.

Next, the onion cubes were separated from the butter by a sieve. Free oil was removed from the onion cubes by centrifugation at 1220 G for 20 seconds.

The onion cubes so obtained were dehydrated by means of air drying employing the drying conditions described in Table 1 (upward air flow).

**Table 1**

| | **Temp.** | **Time** | **Fan Speed** | **Exhaust Dumper position** | **Fresh Dumper position** | **Cooler Air 5 Dumper Position** |
|---|---|---|---|---|---|---|
| **Zone 1** | 60 °C | 60 min | 100% | 40% | 30% | 0% |
| **Zone 2** | 60 °C | 180 min | 75% | 40% | 30% | 0% |
| **Zone 3** | 50 °C | 180 min | 75% | 40% | 30% | 0% |
| **Zone 4** | 20 °C | 20 min | 100% | 0% | 0% | 100% |

The resulting product had a water activity a_{W} of 0,34 and an oil content of 26,5%. The dehydrated sautéed onion pieces had a golden/yellow colour and after rehydration had a taste that was very similar to that of freshly prepared sautéed onions:

### Examples 2-13

Example 1 was repeated, using different starting materials, cut sizes, oil components, heating times and dehydration conditions. The starting materials used and the processing conditions employed are summarized in Tables 2 and 3.

**Table 2**

| **Example** | **Vegetable** | **Amount %** | **Cut size** | **Fresh/Frozen** |
|---|---|---|---|---|
| 2 | onion | 100 | slices 4mm | fresh |
| 3 | onion | 100 | slices 4mm | fresh |
| 4 | onion | 100 | slices 4mm | fresh |
| 5 | onion | 100 | slices 4mm | fresh |
| 6 | onion | 100 | slices 4mm | frozen |
| 7 | onion | 100 | cubes 4,8mm | fresh |
| 8 | onion | 100 | cubes 4,8mm | fresh |
| 9 | onion | 100 | cubes 6mm | frozen |
| 10 | onion | 100 | chopped 4,8x4,3mm | fresh |
| 11 | onion | 50 | cubes 4,8mm | fresh |
| | carrot | 25 | cubes 5mm | |
| | celery | 25 | cubes 5mm | |
| 12 | onion | 90 | cubes 6mm | frozen |
| | garlic | 10 | cubes 3mm | |
| 13 | onion | 80 | cubes 6mm | frozen |
| | garlic | 10 | cubes 3mm | |
| | ginger | 10 | cubes 6mm | |

**Table 3**

| **Example** | **Oil component** | **Heating time** | **Air/Vacuum drying** |
|---|---|---|---|
| 2 | butter | 10 | Air drying |
| 3 | butter | 15 | Air drying |
| 4 | butter | 20 | Air drying |
| 5 | butter oil | 20 | Air drying |
| 6 | butter | 10 | Air drying |
| 7 | butter | 10 | Air drying |
| 8 | butter | 10 | Vacuum drying |
| 9 | butter | 10 | Air drying |
| 10 | butter | 20 | Air drying |
| 11 | olive oil | 15 | Air drying |
| 12 | palm oil | 15 | Air drying |
| 13 | palm oil | 15 | Air drying |

In all cases the dehydrated sautéed vegetable pieces did not show significant browning and after rehydration they tasted like freshly prepared sautéed vegetable pieces.

### Example 14

Raw onions were peeled and subsequently sliced into half rings of 0.2 to about 5 g. About 5 minutes after the slicing, the sliced onions were combined with butter in a Stephan cutter that had been preheated to approx. 95°C in a weight ratio butter/onions of 1:5. The temperature of the resulting mixture was rapidly increased to 90 °C and kept at this temperature for 7 minutes under continuous mixing.

The sautéed onions were kept on a sieve to let excess fat drip off. Next, the sautéed onions were spread out on a plastic tray, and dried in a vacuum dryer at a temperature of 60°C, at a pressure of 10 mbar, and for 18 hours.

The resulting product had a water activity a_{W} of 0.3 and an oil content of less than 30 wt.%. The dehydrated sautéed onion pieces had a golden/yellow colour and after rehydration had a taste that was very similar to that of freshly prepared sautéed onions.

The CIE Lab colour values of the dehydrated pieces were measured after crushing. The following Lab-values were recorded (against a white plate):

| | |
|---|---|
| L* | 64.45 |
| a* | 1.76 |
| b* | 35.21 |

The dehydrated sautéed onion pieces were packaged in alu compound and stored for 12 months under ambient conditions. Following this storage period, the dehydrated pieces were rehydrated and their taste was evaluated. It was found that the taste quality of the product had not deteriorated during storage.

### Example 15

Example 14 was repeated using garlic instead of onions and slicing the garlic into cubes of 0.1 to 5 g. The dehydrated sautéed garlic so obtained had a water activity a_{W} of 0.3. The dehydrated sautéed garlic pieces had a golden/yellow colour and after rehydration had a taste that was very similar to that of freshly prepared sautéed garlic.

The dehydrated sautéed garlic pieces were packaged in alu compound and stored for 12 months under ambient conditions. Following this storage period, the dehydrated pieces were rehydrated and their taste was evaluated. It was found that the taste quality of the product had not deteriorated during storage.

## Claims

1. A method of preparing dehydrated sautéed vegetable pieces, said method comprising:
• providing pieces of fresh vegetable belonging to the genus *Allium,* at least 50 wt.% of said vegetable pieces having a weight of 0.05-5 g;
• combining said vegetable pieces with an oil component in a weight ratio 1:25 to 20:1 to produce a vegetable-oil combination;
• heating the vegetable-oil combination to a temperature of 80-100°C for 3-80 minutes whilst ensuring that the water content of the vegetable pieces is reduced by not more than 20%;
• removing a part of the oil contained in the heated vegetable-oil combination and recovering the heated vegetable pieces; and
• dehydrating the heated vegetable pieces at a temperature of less than 98°C for at least 1 hour to produce dehydrated sautéed vegetable pieces having a water activity of less than 0.5 and an oil content of less than 45 wt.%.

2. Method according to claim 1, wherein the vegetables belonging to the genus *Allium* are selected from onion, garlic, shallots, leeks, scallions and chives.

3. Method according to claim 1 or 2, wherein the vegetable-oil combination is heated to a temperature of 83-98°C for 4-60 minutes, preferably for 5-40 minutes.

4. Method according to any one of the preceding claims, wherein at the beginning of the dehydration, the heated vegetable pieces contain less than 15 wt.% of free oil; free oil being defined as the oil that is removed from the heated vegetable pieces by centrifuging said vegetable pieces at 1230 G for 30 seconds.

5. Method according to any one of the preceding claims, wherein the dehydration comprises subjecting the heated vegetable pieces to air drying and/or vacuum drying for at least 3 hours.

6. Method according to claim 5, wherein the air drying and/or vacuum drying occurs at a temperature of 40-75°C.

7. Method according to any one of the preceding claims, wherein the heated vegetables are dehydrated to a water activity of less than 0.4.

8. Method according to any one of the preceding claims, wherein the dehydrated sautéed vegetable pieces have an oil content that lies within the range of 10-40 wt.%, preferably of 14-30 wt.%.

9. Method according to any one of the preceding claims, wherein the dehydrated sautéed vegetable pieces are packaged, optionally after having been combined with other food ingredients.

10. Dehydrated sautéed vegetable pieces obtained by a method according to any one of the preceding claims.

11. Dehydrated sautéed vegetable pieces according to claim 11, wherein the dehydrated sautéed pieces have a Hunter Lab colour L*-value of at least 50.0.

## Patentansprüche

1. Verfahren zum Herstellen von entwässerten, sautierten Gemüsestücken, wobei das Verfahren Folgendes aufweist:
• Bereitstellen von Stücken von frischem Gemüse, das zur Gattung Allium gehört, wobei mindestens 50 Gew.-% der Gemüsestücke ein Gewicht von 0,05 bis 5 g aufweisen;
• Kombinieren dieser Gemüsestücke mit einer Ölkomponente in einem Gewichtsverhältnis von 1:25 bis 20:1, um eine Gemüse-Öl-Kombination herzustellen;
• Erhitzen der Gemüse-Öl-Kombination für 3 bis 80 Minuten auf eine Temperatur von 80 bis 100 °C, wobei gesichert wird, dass der Wassergehalt der Gemüsestücke um nicht mehr als 20 % verringert wird;
• Entfernen von einem Teil des Öls, das in der erhitzten Gemüse-Öl-Kombination enthalten ist, und Gewinnen der erhitzten Gemüsestücke; und
• Entwässern der erhitzten Gemüsestücke für mindestens 1 Stunde bei einer Temperatur von weniger als 98 °C, um entwässerte, sautierte Gemüsestücke mit einer Wasseraktivität von weniger als 0,5 und einem Ölgehalt von weniger als 45 Gew.-% zu erzeugen.

2. Verfahren nach Anspruch 1,
wobei das zur Gattung Allium gehörende Gemüse aus Zwiebeln, Knoblauch, Schalotten, Lauch, Frühlingszwiebeln und Schnittlauch ausgewählt ist.

3. Verfahren nach Anspruch 1 oder 2,
wobei die Gemüse-Öl-Kombination für 4 bis 60 Minuten, vorzugsweise 5 bis 40 Minuten auf eine Temperatur von 83 bis 98 °C erhitzt wird.

4. Verfahren nach einem der vorstehenden Ansprüche,
wobei zu Beginn der Entwässerung die erhitzten Gemüsestücke weniger als 5 Gew.-% ungebundenes Öl enthalten, wobei ungebundenes Öl als das Öl definiert wird, das aus den erhitzten Gemüsestücken entfernt wird, indem die Gemüsestücke für 30 Sekunden mit 1230 g zentrifugiert werden.

5. Verfahren nach einem der vorstehenden Ansprüche,
wobei die erhitzten Gemüsestücke beim Entwässern für mindestens 3 Stunden dem Lufttrocknen und/oder Vakuumtrocknen unterzogen werden.

6. Verfahren nach Anspruch 5,
wobei das Lufttrocknen und/oder Vakuumtrocknen bei einer Temperatur von 40 bis 75 °C erfolgt.

7. Verfahren nach einem der vorstehenden Ansprüche,
wobei das erhitzte Gemüse bis zu einer Wasseraktivität von weniger als 0,4 entwässert wird.

8. Verfahren nach einem der vorstehenden Ansprüche,
wobei die entwässerten, sautierten Gemüsestücke einen Ölgehalt haben, der im Bereich von 10 bis 40 Gew.-%, vorzugsweise von 14 bis 30 Gew.-% liegt.

9. Verfahren nach einem der vorstehenden Ansprüche,
wobei die entwässerten, sautierten Gemüsestücke abgepackt werden, gegebenenfalls nachdem sie mit anderen Lebensmittelbestandteilen kombiniert wurden.

10. Entwässerte, sautierte Gemüsestücke, die nach einem Verfahren nach einem der vorstehenden Ansprüche erhalten wurden.

11. Entwässerte, sautierte Gemüsestücke nach Anspruch 11,
wobei die entwässerten, sautierten Stücke einen L*-Farbwert des Hunter-Lab-Systems von mindestens 50,0 aufweisen.

## Revendications

1. Procédé de préparation de morceaux de légumes sautés déshydratés, ledit procédé comprenant :
. la fourniture de morceaux de légumes frais appartenant à l'espèce *Allium,* au moins 50 % en poids desdits morceaux de légumes présentant un poids de 0,05-5 g ;
. la combinaison desdits morceaux de légumes avec un constituant d'huile dans un rapport massique de 1:25 à 20:1 pour produire une combinaison légumes-huile ;
. le chauffage de la combinaison légume-huile à une température de 80-100°C pendant 3-80 minutes tout en s'assurant que la teneur en eau des morceaux de légumes est réduite d'au plus 20 % ;
. l'élimination d'une partie de l'huile contenue dans la combinaison légumes-huile chauffée et la récupération des morceaux de légumes chauffés ; et
. la déshydratation des morceaux de légumes chauffés à une température inférieure à 98°C pendant au moins 1 heure pour produire des morceaux de légumes sautés déshydratés présentant une activité d'eau inférieure à 0,5 et une teneur en huile inférieure à 45 % en poids.

2. Procédé selon la revendication 1, dans lequel les légumes appartenant à l'espèce *Allium* sont choisis parmi l'oignon, l'ail, les échalotes, les poireaux, les ciboules et les civettes.

3. Procédé selon la revendication 1 ou 2, dans lequel la combinaison légumes-huile est chauffée à une température de 83-98°C pendant 4-60 minutes, de préférence pendant 5-40 minutes.

4. Procédé selon l'une quelconque des revendications précédentes, dans lequel au début de la déshydratation, les morceaux de légumes chauffés contiennent moins de 15 % en poids d'huile libre ; l'huile libre étant définie comme l'huile qui est éliminée des morceaux de légumes chauffés par centrifugation desdits morceaux de légumes à 1 230 G pendant 30 secondes.

5. Procédé selon l'une quelconque des revendications précédentes, dans lequel la déshydratation consiste à soumettre les morceaux de légumes chauffés à un séchage à l'air et/ou à un séchage sous vide pendant au moins 3 heures.

6. Procédé selon la revendication 5, dans lequel le séchage à l'air et/ou le séchage sous vide a lieu à une température de 40 - 75°C.

7. Procédé selon l'une quelconque des revendications précédentes, dans lequel les légumes chauffés sont déshydratés jusqu'à une activité d'eau inférieure à 0,4.

8. Procédé selon l'une quelconque des revendications précédentes, dans lequel les morceaux de légumes sautés déshydratés présentent une teneur en huile qui se trouve dans l'intervalle de 10-40 % en poids, de préférence de 14 - 30 % en poids.

9. Procédé selon l'une quelconque des revendications précédentes, dans lequel les morceaux de légumes sautés déshydratés sont emballés, éventuellement après avoir été combinés avec d'autres ingrédients alimentaires.

10. Morceaux de légumes sautés déshydratés obtenus par un procédé selon l'une quelconque des revendications précédentes.

11. Morceaux de légumes sautés déshydratés selon la revendication 11, dans lequel les morceaux sautés déshydratés présentent une valeur de couleur Hunter Lab L* d'au moins 50,0.
